(19) Europäisches Patentamt / European Patent Office / Office européen des brevets

(11) **EP 3 815 200 B1**

(12) **EUROPEAN PATENT SPECIFICATION**

(45) Date of publication and mention
of the grant of the patent:
**01.05.2024 Bulletin 2024/18**

(21) Application number: **19817108.4**

(22) Date of filing: **20.09.2019**

(51) International Patent Classification (IPC):
$H01S\ 3/115^{(2006.01)}$    $H01S\ 3/117^{(2006.01)}$
$H01S\ 3/127^{(2006.01)}$    $H01S\ 3/00^{(2006.01)}$
$H01S\ 3/11^{(2023.01)}$    $G02F\ 1/11^{(2006.01)}$
$H01S\ 3/1106^{(2023.01)}$    $G02F\ 1/03^{(2006.01)}$

(52) Cooperative Patent Classification (CPC):
**H01S 3/0085; G02F 1/0322; H01S 3/1106;**
G02F 1/0154; G02F 1/11; G02F 2201/16;
H01S 3/0057; H01S 3/0071

(86) International application number:
**PCT/US2019/052122**

(87) International publication number:
**WO 2021/054970 (25.03.2021 Gazette 2021/12)**

(54) **SINUSOIDAL PHASE MODULATION OF MODE-LOCKED LASERS**

SINUSFÖRMIGE PHASENMODULATION VON MODENGEKOPPELTEN LASERN

MODULATION DE PHASE SINUSOÏDALE DE LASERS À MODES BLOQUÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.05.2021 Bulletin 2021/18**

(73) Proprietor: **Thorlabs, Inc.**
**Newton, New Jersey 07860 (US)**

(72) Inventors:
• **BROOKER, Jeffrey S.**
**Newton, NJ 07860 (US)**
• **RADTKE, William**
**Newton, NJ 07860 (US)**
• **MA, Hongzhou**
**Newton, NJ 07860 (US)**
• **LIESER, Eric**
**Newton, NJ 07860 (US)**

(74) Representative: **Grättinger Möhring von
Poschinger
Patentanwälte Partnerschaft mbB
Wittelsbacherstrasse 2b
82319 Starnberg (DE)**

(56) References cited:
GB-A- 2 336 938     US-A1- 2004 253 000
US-A1- 2004 253 000     US-A1- 2006 039 419
US-A1- 2006 039 419     US-A1- 2009 245 301
US-A1- 2010 128 744     US-A1- 2010 128 744
US-A1- 2014 050 235     US-A1- 2014 050 235
US-A1- 2018 342 847

**Description**

**CROSS REFERENCE TO RELATED APPLICATIONS**

FIELD **OF THE INVENTION**

The invention generally relates to laser modulation techniques. More particularly, the invention relates to a modulation of an ultrafast mode-locked laser using an electro-optic modulator (EOM) driven with a frequency and phase coherent AC waveform.

**BACKGROUND**

Mode-Locked Laser

Mode-locking is a technique in optics by which a laser can be made to produce pulses of light of extremely short duration, on the order of picoseconds ($10^{-12}$ s) or femtoseconds ($10^{-15}$ s).

The basis of the technique is to induce a fixed-phase relationship between the longitudinal modes of the laser's resonant cavity. The laser is then said to be "phase-locked" or 'mode-locked." Interference between these modes causes the laser light to be produced as a train of pulses. Depending on the properties of the laser, these pulses may be of extremely brief duration. For example, an ultrafast mode-locked laser is generally known as a laser that can generate pulses having a pulse duration less than a picosecond, and as short as a few femtoseconds. The train of pulses is commonly in the 50-100MHz repetition rate range, and the duty cycle is lower than 0.01% or less.

Electro-Optic Modulator (EOM)

Electro-optic modulator (EOM) is an optical device in which a signal-controlled element exhibiting the electro-optic effect is used to modulate a beam of light. The modulation may be imposed on the phase, frequency, amplitude, or polarization of the beam.

The simplest kind of EOM consists of a crystal, such as lithium niobate, whose refractive index is a function of the strength of the local electric field. That means that if a lithium niobate crystal is exposed to an electric field, light will travel more slowly through it. But the phase of the light leaving the crystal is directly proportional to the length of time it takes for the light to pass through the crystal. Therefore, the phase of the laser light exiting an EOM can be controlled by changing the electric field applied to the crystal.

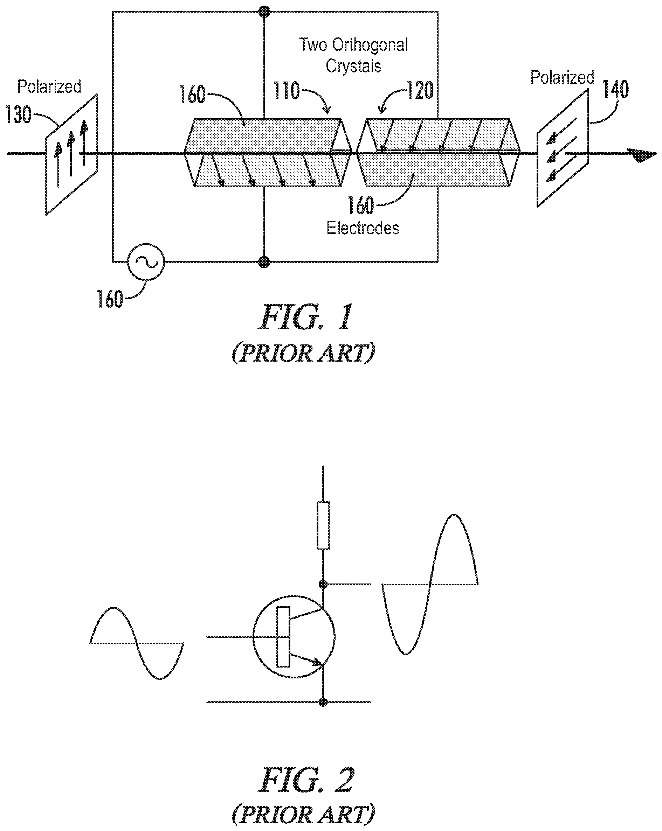

Combining this phase change with polarizers before and after the crystal, amplitude modulation can be achieved. When using an EOM as an amplitude modulator, the configuration is usually with two orthogonally aligned crystals. This helps reduce thermal drift. Fig. 1 shows an example setup of the EOM amplitude modulator.

The electro-optic amplitude modulator may be a Pockels cell type modulator consisting of two matched lithium niobate crystals 110, 120 packaged in a compact housing with an RF input connector. Applying an electric field to the crystal induces a change in the indices of refraction (both ordinary and extraordinary) giving rise to an electric field dependent birefringence which leads to a change in the polarization state of the optical beam. The Electro-optic crystal acts as a variable waveplate with retardance linearly dependent on the applied electric field. By placing a linear polarizer 140 at the exit, the beam intensity through the polarizer varies sinusoidally with linear change in applied voltage.

Electro-optic phase modulators provide a variable phase shift on a linearly polarized input beam. In one embodiment, the input beam is linearly polarized along the vertical direction which is the Z-axis of the crystal by a linear polarizer 130. A voltage at the RF input 150 is applied across the Z-axis electrodes 160 inducing a change in the crystal's extraordinary index of refraction thereby causing a phase shift in the optical signal.

DC Modulation

Two methods of DC control for amplitude modulation of mode-locked lasers are currently commonly used.

Existing techniques have achieved ~DC - 1MHz modulation control using a high voltage/high power DC coupled linear amplifier. This method allows control to any output intensity level over the course of 10 to 100 laser pulses. Fig. 2 shows a schematic diagram of a linear amplifier.

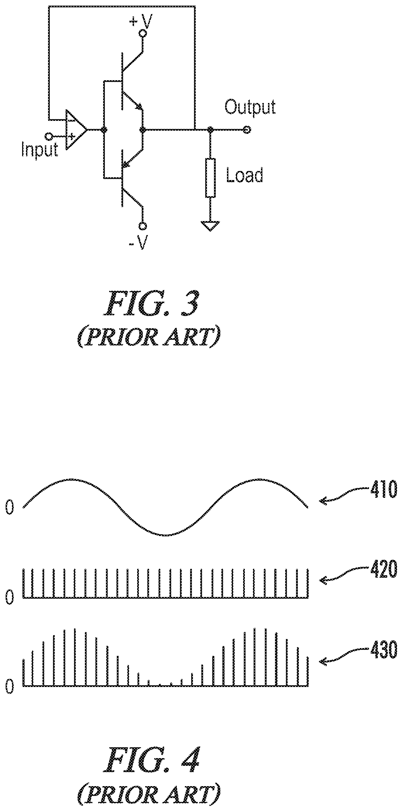

Several other EOM drive manufacturers use a push-pull arrangement to switch between two slowly varying DC levels. This method allows for switching between two output intensity levels over the course of 2 to 3 laser pulses. Changing those DC levels takes about 1,000 to 10,000 laser pulses. This approach is very effective in edge blanking of an image or other applications where an on-off feature is needed. Fig. 3 shows a schematic diagram of a push-pull amplifier.

AC Modulation

Modulating the amplitude of a mode-locked laser with an AC waveform is commonly done. It is usually accomplished by adding circuitry to create a resonant tank between the EOM crystal (purely capacitive element) and other passive components. This resonant system can then be controlled by a relatively low power AC signal generator. Phase locking this system to the train of pulses from the mode-locked laser allows the overlay of a signal on the output intensity of the train of pulses. As shown in Fig. 4, an AC waveform 410 is applied to the output pulses 420 of a mode-locked laser, resulting in a modulated amplitude output 430.

The modulation techniques discussed above have the drawback that it takes many pulses to change the output amplitude from one value to another desired value. However, there is a need to increase the speed of modulation. In particular, a pulse-by-pulse control of the laser power would provide improvements of and open up many new uses of ultrafast mode-locked lasers.

Reference is made to the following documents:

US 2006/039419 A1 (DESHI TAN [CN]) 23 February 2006;
US 2004/253000 A1 (GRIFIN ROBERT ANTHONY [GB]) 16 December 2004;
US 2010/128744 A1 (DELADURANTAYE PASCAL [CA] ET AL) 27 May 2010;
US 2018/342847 A1 (BROOKER JEFFREY S [US] ET AL) 29 November 2018;
US 2009/245301 A1 (PENG XIAOYUAN [US] ET AL) 1 October 2009;
US 2014/050235 A1 (CLOWES JOHN REDVERS [GB] ET AL) 20 February 2014

## SUMMARY

The invention is defined in independent claim 1. Preferred embodiments are given in the dependent claims.

The invention provides an ultrafast mode-locked laser including: a mode-locked laser source configured to output laser pulses having a repetition rate; a synchronous electro-optic modulator (SEOM), including: a quarter wave plate; a first polarizing beam splitter or polarizer; an electro-optic modulator (EOM); circuitry configured to drive the SEOM with a drive waveform, the drive waveform being a phase-coherent sinusoidal waveform at a frequency equal to half of the repetition rate of the mode-locked laser source; and a second polarizing beam splitter; wherein the SEOM is arranged to direct the laser pulses from the laser source through the quarter wave plate, the first polarizing beam splitter, the EOM, and then to the second polarizing beam splitter; wherein the second polarizing beam splitter is configured to split the light pulses from the EOM into a first pulse train in a first direction having a first polarization state and a second pulse train in a second direction having a second polarization state,

wherein the ultrafast mode-locked laser further comprises one or more optical elements configured to feed the second pulse train back to the SEOM.

Another embodiment of the invention provides an ultrafast mode-locked laser source configured to output laser pulses having a repetition rate; $2^n - 1$ synchronous electro-optic modulators (SEOMs) arranged into n stages, n being an integer; for k = 1 to n, the $k^{th}$ stage comprises $2^{(k-1)}$ SEOMs, outputs of the SEOMs in the $k^{th}$ stage being fed to the SEOM of the $(k+1)^{th}$ stage, each of the SEOMs in the $k^{th}$ stage being driven with a phase-coherent sinusoidal waveform at a frequency equal to 1/2 the repetition rate of the pulse train entering into the stage; wherein each of the SEOM includes: a quarter wave plate; a first polarizing beam splitter or polarizer; an electro-optic modulator (EOM); circuitry configured to drive the SEOM with a drive waveform; and a second polarizing beam splitter; wherein the SEOM is arranged to direct laser pulses from an input of the SEOM through the quarter wave plate, the first polarizing beam splitter, the EOM, and then to the second polarizing beam splitter; wherein the second polarizing beam splitter is configured to split the light pulses from the EOM into a first output pulse train in a first direction having a first polarization state and a second output pulse train in a second direction having a second polarization state, wherein the ultrafast mode-locked laser further comprises one or more optical elements configured to feed the second pulse train back to the SEOM.

## BRIEF DESCRIPTION OF THE DRAWINGS

Figure 1 shows a schematic diagram of an EOM Amplitude Modulator.
Figure 2 shows a schematic diagram of a linear amplifier.
Figure 3 shows a schematic diagram of a push-pull amplifier.
Figure 4 illustrates an amplitude modulation with an AC waveform.
Figure 5 shows an EOM amplitude modulation assembly according to an embodiment not falling under the scope of the claims.

Figure 6 illustrates the test results of the EOM amplitude modulation assembly according to an embodiment not falling under the scope of the claims.

Figure 7 shows a waveform where a phase shift of 90° is used to shift the drive waveform relative to the laser pulse according to an embodiment not falling under the scope of the claims.

Figure 8 is a schematic circuit diagram of the series of connected pulse generating stages according to an embodiment not falling under the scope of the claims.

Figure 9 shows the waveforms with various DC bias according to an embodiment not falling under the scope of the claims.

Figure 10 shows the waveforms with and without phase shift according to an embodiment.

Figure 11 shows the pulse trains generated by an EOM amplitude modulation assembly according to the invention.

Figure 12 shows a schematic diagram of an EOM amplitude modulation assembly according to the invention.

Figure 13 shows an AOM amplitude modulation assembly according to an embodiment not falling under the scope of the claims.

Figure 14 shows a multi-stage SEOM configuration according to an embodiment.

Figure 15 shows a multi-stage SEOM configuration according to another embodiment.

Figure 16 shows SEOM with feedback loop according to an embodiment.

## DETAILED DESCRIPTION OF THE PREFERRED EMBODIMENTS

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

This disclosure describes the best mode or modes of practicing the invention as presently contemplated. This description is not intended to be understood in a limiting sense, but provides an example of the invention presented solely for illustrative purposes by reference to the accompanying drawings to advise one of ordinary skill in the art of the advantages and construction of the invention. In the various views of the drawings, like reference characters designate like or similar parts.

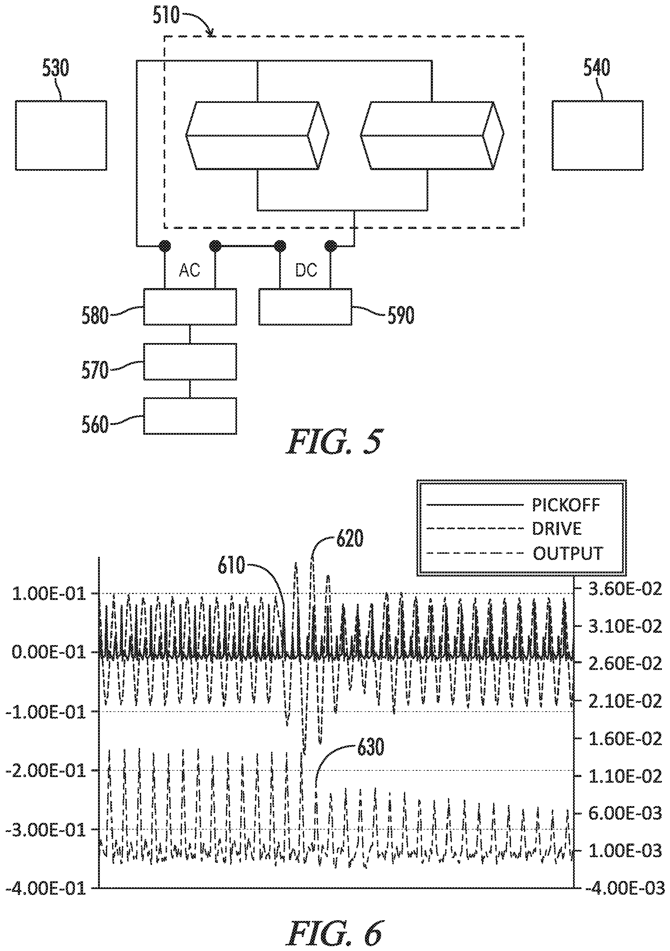

Fig. 5 shows a setup of the modulator according to an embodiment not falling under the scope of the claims. Similar to the setup of Fig. 1, the EOM 510 is placed between two polarizers 530, 540. A custom circuit 560 is used to lock to the laser and create a phase locked signal, with the ability to step phase shift that signal, to a RF power amplifier 570 which drives a transformer 580 providing the AC voltage to the EOM. A DC input (offset) 590 is used to adjust the location of the AC signal within the range of the EOM. The AC signal used for this setup is well below the required amplitude for full contrast laser modulation.

Tests were performed using the setup shown in Fig. 5, and the results are shown in Fig. 6. The waveform 610 shows the pulses from the pickoff before the EOM amplitude modulation assembly. Waveform 620 is the drive waveform, generated by the custom phase sync circuit, sent to the power amplifier. Note the 180 degree phase change halfway through the data set. The waveform 630 is the output detector indicating laser intensity.

This shows that using this method, laser intensity of an ultrafast mode-locked laser can be modulated to arbitrary levels within 2-3 laser pulses on an 80 MHz repetition rate laser. This superior modulation speed is not achieved by any of the existing techniques.

In one embodiment, a sinusoidal waveform, which is representative of the EOM modulation waveform, is expressed as:

$$v_s(t) = V_P \sin(2\pi f t + \varphi),$$

where $V_P$ is the amplitude, or "Peak Amplitude" of the waveform, f is frequency in Hz, and $\varphi$ is the phase in radians.

Note that there are other representations of amplitude, for example, $V_{RMS} = V_P/\sqrt{2}$ (Root Mean Square Amplitude) or $V_{Peak\text{-}Peak} = 2V_P$ (Peak-to-Peak Amplitude).

A periodic impulse train, which is representative of pulsed lasers, is expressed as:

$$p(t) = \sum_{n=-\infty}^{\infty} \delta(t - nT_s)$$

where $T_S$ is the period of the pulses. This means that laser pulses occur at $t = 0$, $t = T_S$, $t = 2T_S$, ..., etc. Now the phase of the EOM drive sinusoid is relative to this and is defined by $\varphi$. The voltage on the EOM is relevant only at the instant in time when the laser pulse is present in the EOM material (crystal). That means the voltage on the sinusoidal waveform is relevant only at time $t = 0$, $t = T_S$, $t = 2T_S$, ..., etc. The drive voltage is thus the sinusoid equation evaluated at those instants in time, and now looks like a discrete-time sampled signal:

$$v_s(nT_s) = V_P \sin(2\pi f nT_s + \varphi), \ n = 0, 1, 2, \dots$$

When the sinusoid waveform is frequency locked to the laser, we have $f = 1/T_s$ = repetition rate of the mode-locked laser. This is the key innovation concept from which the present invention is derived. In some embodiments, this concept may be extended to a drive waveform having a phase-coherent pulsed waveform at a frequency equal to the repetition rate of the mode-locked laser, as well as to drive waveform having a phase-coherent sinusoidal waveform at a frequency equal to $1/(2T_s)$, etc.

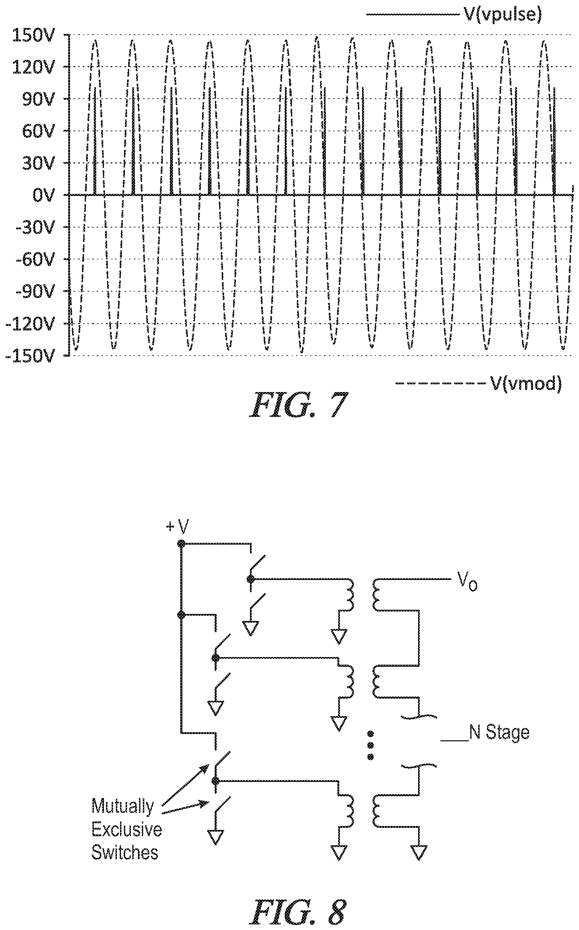

Fig. 7 shows a waveform where a phase shift of 90° is used to shift the drive waveform relative to the laser pulse, and thus change the voltage on the EOM at the instant the pulse arrives such that the voltage on the EOM changes from $V_P$ to 0.

Note that shifting the phase another 90° (for a total of 180°) will change the voltage to $-V_P$, doubling the voltage range available to drive the EOM.

In one embodiment, a discrete number of pulse amplitudes are generated by a series of connected pulse generating stages. Fig. 8 is a schematic circuit diagram of the series of connected pulse generating stages according to an embodiment.

When a DC bias ($V_{DC\ BIAS}$) is applied, the drive waveform is expressed as:

$$v_s(nT_s) = V_P \sin(2\pi f nT_s + \varphi) + V_{DC\ BIAS}, \ n = 0, 1, 2, \dots$$

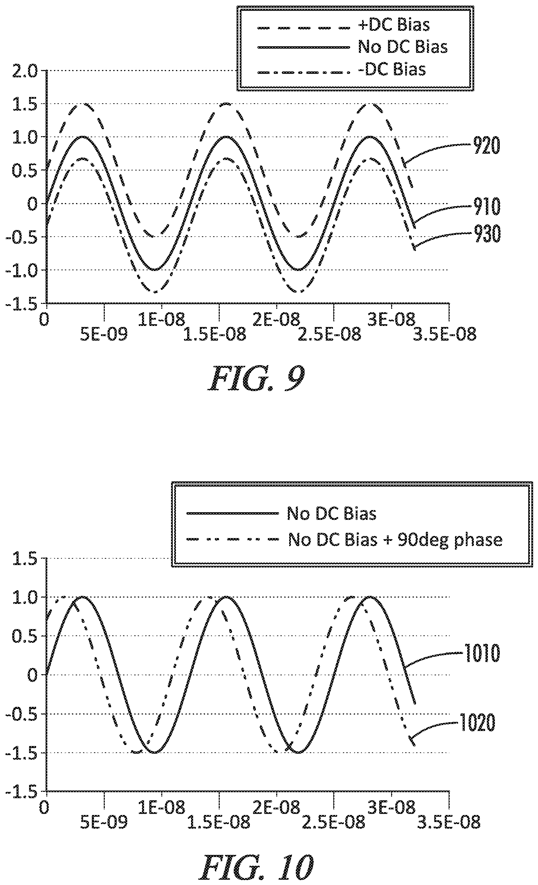

Fig. 9 shows the waveforms with: (1) no DC bias 910, (2) +DC bias 920 and (3) -DC bias 930 is applied. Fig. 10 shows the cases where (1) no DC bias is applied 1010 and (2) no DC bias is applied with +90 degrees phase shift 1020.

In one embodiment, a DC bias is applied such that the waveform is centered with symmetrical positive and negative voltages having substantially equal EOM optical phase shift.

In the case where the drive waveform has a phase-coherent sinusoidal waveform at a frequency equal to half of a repetition rate of the mode-locked laser, the output pulse train would have a repetition rate equal to half of a repetition rate of the mode-locked laser. For example, an ultrafast mode-locked laser having an 80 MHz repetition rate laser would output a pulse train of 40 MHz based on the EOM configured in the embodiments above. That is, the drive waveform has a phase-coherent sinusoidal waveform at a frequency equal to $1/(2T_s)$. The drive voltage now looks like a discrete-time sampled signal:

$$v_s(nT_s) = V_P \sin(n\pi + \varphi), \ n = 0, 1, 2, \dots$$

Thus, the even pulses would subject to the drive voltage = $V_P \sin(\varphi)$, $n = 0, 2, 4, \dots$, and the odd pulses would subject to the drive voltage = $-V_P \sin(\varphi)$, $n = 1, 3, 5, \dots$. For a phase shift of 90°, we have an alternating drive voltage of $\pm V_P$.

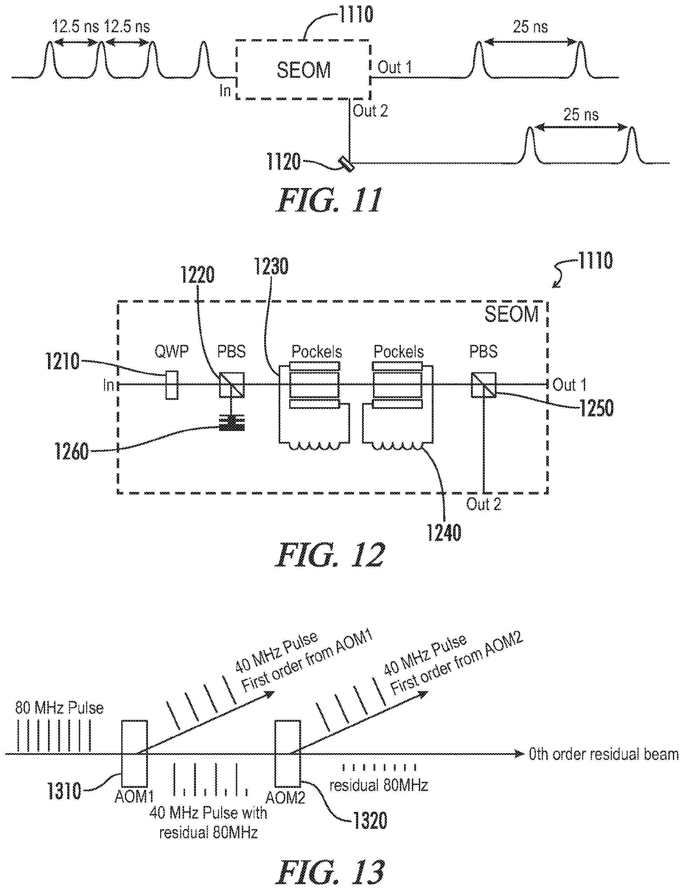

A resonant driver that is phase synchronized to a femtosecond or picosecond pulsed laser is used for driving an EOM. The resonant driver is run with a resonant frequency equal to half the repetition rate of the laser and phase align it so the pulses arrive at either a minimum or maximum of the electric field oscillation, as discussed in the previous paragraph. The pulses subject to the maximum of the electric field exit through the output polarizer. On the output polarizer, instead of dumping the pulses subject to the minimum of the electric field ("low" pulses), these pulses are diverted using a polarizing beam splitter (PBS) to a second path. This creates two pulse trains that are each half the repetition rate of the input laser with the full peak power per pulse. For example, as shown in Fig. 11, 12.5 ns interval pulses generated by an 80 MHz laser are modulated by the Synchronous EOM (SEOM) 1110 driven by a 40 MHz waveform into two pulse trains, each having a pulse interval of 25 ns. The mirror 1120 is used to direct the second output to a desired direction, which may be the same or different direction from that of the first output.

Figure 12 is a detail schematic diagram of the SEOM 1110 according to the invention as claimed. A quarter wave plate 1210 and a first PBS or polarizer 1220 configured to receive an input from a femtosecond or picosecond pulsed laser to provide circularly polarized laser pulses into the electro-optic modulator (such as a Pockels cell) 1230. If the laser pulses are reflected the PBS 1220, they are directed into a sink 1260. The electro-optic modulator 1230 is driven by a waveform driver 1240. The modulated output from the electro-optic modulator is split by the second PBS 1250 into output 1 and output 2 according to their respective polarization states.

In one embodiment, similar drive and pulse splitting configurations could be used with an acousto-optic modulator (AOM) in place of the EOM.

An acousto-optic modulator (AOM), also called a Bragg cell, uses the acousto-optic effect to diffract and shift the frequency of light using sound waves (usually at radio-frequency). They are used in lasers for Q-switching, telecommunications for signal modulation, and in spectroscopy for frequency control. A piezoelectric transducer is attached to a material such as glass. An oscillating electric signal drives the transducer to vibrate, which creates sound waves in the material. These can be thought of as moving periodic planes of expansion and compression that change the index of refraction. Incoming light scatters (see Brillouin scattering) off the resulting periodic index modulation and interference occurs similar to Bragg diffraction. The interaction can be thought of as a three-wave mixing process resulting in Sum-frequency generation or Difference-frequency generation between phonons and photons.

Fig. 13 is an illustrative example of using AOM in an ultrafast mode-locked laser arrangement according to an embodiment not falling under the scope of the claims. A laser source generates a pulse train having a repetition rate (e.g. 80 MHz) and the pulses are diffracted by the first AOM 1310 when the AOM is driven by a phase-coherent sinusoidal waveform at a frequency equal to half of the repetition rate of the mode-locked laser source. In this example, a pulse train having a repetition rate of 40 MHz is output in the direction of the first order diffraction of the first AOM. In the un-diffracted (zero order) direction of the first AOM, a pulse train having a repetition rate of 40 MHz and a residual 80 MHz pulse train arrive at a second AOM 1320. The second AOM 1320 is driven by a phase-coherent sinusoidal waveform at a frequency equal to half of the repetition rate of the mode-locked laser source. Thus, another pulse training having a repetition rate of 40 MHz is in the direction of the first order diffraction of the second AOM, and the residual 80 MHz pulse train is output from the un-diffracted (zero order) direction of the second AOM. The phases of the drive waveform in the first and second AOMs are respectively synchronized to the odd and even pulses of the pulse train from the mode-locked laser. This arrangement results in two pulse trains, each having a repetition rate that is half of the repetition rate of the mode-locked laser source.

An example application of the ultrafast mode-locked laser according to one embodiment is using an 80MHz Ti: Sapphire femtosecond laser input to create two 40MHz laser paths that can be focused to different locations within a sample in a 2 Photon Imaging system. De-multiplexing the resulting signal can provide images at two separate locations on the sample with no loss of laser peak power (required for deep imaging) or reduction in framerate.

Another example application of the ultrafast mode-locked laser according to one embodiment is using the two 40MHz pulses to excite the sample (again in a 2 Photon imaging system) with pulses of two different intensities. De-multiplexing and choosing the appropriate sample based on detection path saturation can provide a final image with 2x the dynamic range of a single intensity pulse train.

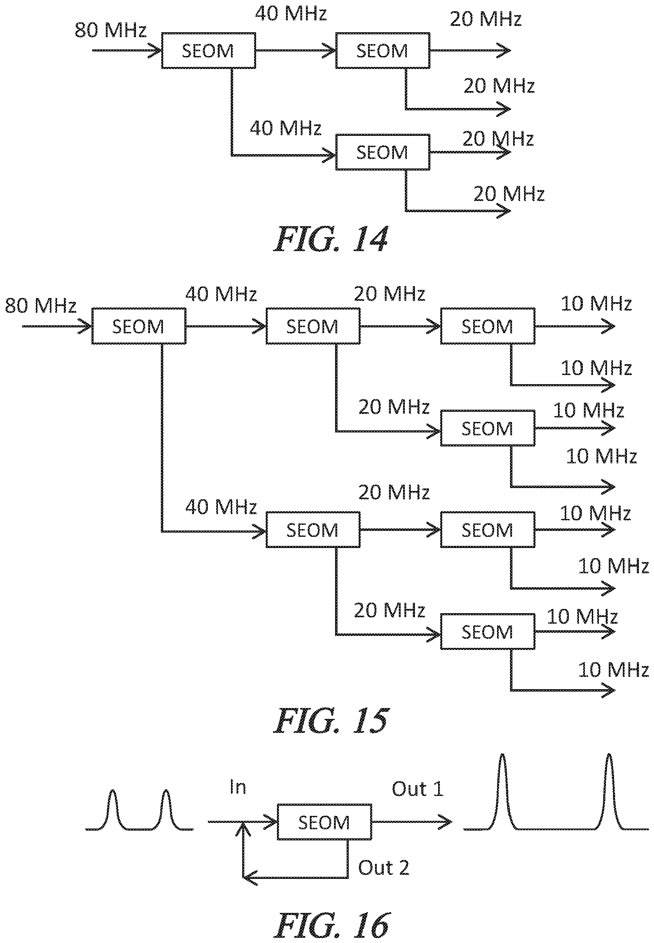

Both of these example applications can be modified to a power of 2 increase by using more of these Synchronous EOM (SEOM) devices. As shown in Fig. 14, from an 80MHz source, 3 SEOMs could be used to create 4 pulse trains with 20 MHz repetition rate, again with no loss of peak power in the laser pulses. This peak power is very important to deep imaging in 2 Photon systems. Extending to 7 SEOMs could give 8 trains at 10 MHz, as shown in Fig. 15. In general, to generate $2^n$ pulse trains having a repetition rate equal to $1/2^n$ of the repetition rate of the mode-locked laser source, n being an integer, the mode-locked laser may have $2^n - 1$ SEOMs arranged into n stages, with the $k^{th}$ stage containing $2^{(k-1)}$ SEOMs, k = 1 to n. The outputs of the SEOMs in the $k^{th}$ stage being fed to the SEOM of the $(k+1)^{th}$ stage. Each of the SEOMs in the $k^{th}$ stage are driven by a phase-coherent sinusoidal waveform at a frequency equal to 1/2 the repetition rate of the pulse train entering into the stage. The phases of the drive waveform in the SEOMs are synchronized to the respective pulses in the pulse train from the mode-locked laser.

When peak power higher than a single pulse is desired, the pulses on one path could be looped back into the input of the SEOM with high resolution temporal alignment so the peak power of the aligned pulses adds, as shown in Fig. 16. The delay of the loop back path is configured to cause a pulse in the second pulse train to coincide with the arrival of the next pulse in the pulse train generated by the mode-locked laser source.

While the present invention has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the invention. ,

**Claims**

1.   An ultrafast mode-locked laser comprising:

  a mode-locked laser source configured to output laser pulses having a repetition rate;
  a synchronous electro-optic modulator, SEOM, (1110), comprising:

    a quarter wave plate (1210);
    a first polarizing beam splitter or polarizer (1220);
    an electro-optic modulator, EOM, (1230);
    circuitry (1240) configured to drive the SEOM with a drive waveform, the drive waveform being a phase-coherent sinusoidal waveform at a frequency equal to half of the repetition rate of the mode-locked laser source; and
    a second polarizing beam splitter (1250);
    wherein the SEOM is arranged to direct the laser pulses from the laser source through the quarter wave plate, the first polarizing beam splitter, the EOM, and then to the second polarizing beam splitter;
    wherein the second polarizing beam splitter is configured to split the light pulses from the EOM into a first pulse train in a first direction having a first polarization state and a second pulse train in a second direction having a second polarization state;
    wherein the ultrafast mode-locked laser further comprises one or more optical elements configured to feed the second pulse train back to the SEOM.

2.   The ultrafast mode-locked laser of claim 1, the SEOM is configured to generate a phase modulated output.

3.   The ultrafast mode-locked laser of claim 1, the SEOM is configured to generate an amplitude modulated output.

4.   The ultrafast mode-locked laser of claim 1, wherein the SEOM comprises a Pockels cell.

5.   The ultrafast mode-locked laser of claim 1, further comprising a loop back path configured to direct the second pulse train back into an input of the SEOM;
  wherein a delay of the loop back path is configured to cause a pulse in the second pulse train to coincide with the arrival of the next pulse in the pulse train generated by the mode-locked laser source.

6.   An ultrafast mode-locked laser comprising:

  a mode-locked laser source configured to output laser pulses having a repetition rate;
  $2^n - 1$ synchronous electro-optic modulators, SEOMs, according to claim 1 arranged into n stages, n being an integer greater than 1;
  for k = 1 to n, the $k^{th}$ stage comprises $2^{(k-1)}$ SEOMs, outputs of the SEOMs in the $k^{th}$ stage being fed to the SEOM of the $(k+1)^{th}$ stage, each of the SEOMs in the $k^{th}$ stage being driven with a phase-coherent sinusoidal waveform at a frequency equal to 1/2 the repetition rate of the pulse train entering into the stage.

**Patentansprüche**

1.   Ultraschneller modengekoppelter Laser, umfassend:

  eine modengekoppelte Laserquelle, die dazu ausgelegt ist, Laserimpulse, die eine Repetitionsrate aufweisen, auszugeben,
  einen synchronen elektrooptischen Modulator SEOM (1110), umfassend:

eine Viertelwellenplatte (1210),

einen ersten polarisierenden Strahlteiler oder Polarisator (1220),

einen elektrooptischen Modulator EOM (1230),

eine Schaltung (1240), die dazu ausgelegt ist, den SEOM mit einer Ansteuerwellenform anzusteuern, wobei die Ansteuerwellenform eine phasenkohärente Sinuswellenform mit einer Frequenz ist, die der Hälfte der Repetitionsrate der modengekoppelten Laserquelle gleich ist, und

einen zweiten polarisierenden Strahlteiler (1250),

wobei der SEOM dazu eingerichtet ist, die Laserimpulse von der Laserquelle durch die Viertelwellenplatte, den ersten polarisierenden Strahlteiler, den EOM, und dann zum zweiten polarisierenden Strahlteiler zu lenken,

wobei der zweite polarisierende Strahlteiler dazu ausgelegt ist, die Lichtimpulse vom EOM in eine erste Impulsfolge in einer ersten Richtung, die einen ersten Polarisationszustand aufweist, und eine zweite Impulsfolge in einer zweiten Richtung, die einen zweiten Polarisationszustand aufweist, aufzuteilen,

wobei der ultraschnelle modengekoppelte Laser ferner ein oder mehrere optische Elemente umfasst, die dazu ausgelegt sind, die zweite Impulsfolge zurück an den SEOM zu führen.

2. Ultraschneller modengekoppelter Laser nach Anspruch 1, wobei der SEOM dazu ausgelegt ist, eine phasenmodulierte Ausgabe zu generieren.

3. Ultraschneller modengekoppelter Laser nach Anspruch 1, wobei der SEOM dazu ausgelegt ist, eine amplitudenmodulierte Ausgabe zu generieren.

4. Ultraschneller modengekoppelter Laser nach Anspruch 1, wobei der SEOM eine Pockels-Zelle umfasst.

5. Ultraschneller modengekoppelter Laser nach Anspruch 1, der ferner einen Rückschleifenpfad umfasst, der dazu ausgelegt ist, die zweite Impulsfolge zurück in einen Eingang des SEOM zu lenken,

wobei eine Verzögerung des Rückschleifenpfads ausgelegt ist, um zu veranlassen, dass ein Impuls in der zweiten Impulsfolge mit der Ankunft des nächsten Impulses in der durch die modengekoppelte Laserquelle generierten Impulsfolge zusammenfällt.

6. Ultraschneller modengekoppelter Laser, umfassend:

eine modengekoppelte Laserquelle, die dazu ausgelegt ist, Laserimpulse, die eine Repetitionsrate aufweisen, auszugeben,

$2^n - 1$ synchrone elektrooptische Modulatoren SEOMs nach Anspruch 1, die in n Stufen angeordnet sind, wobei n eine ganze Zahl größer 1 ist,

wobei für k = 1 bis n, die k-te Stufe $2^{(k-1)}$ SEOMs umfasst, wobei Ausgaben der SEOMs in der k-ten Stufe in den SEOM der (k+1)-ten Stufe gespeist werden, wobei jeder der SEOMs in der k-ten Stufe mit einer phasenkohärenten Sinuswellenform mit einer Frequenz, die 1/2 der Repetitionsrate der in die Stufe eintretenden Impulsfolge gleich ist, angesteuert wird.

**Revendications**

1. Laser ultrarapide à modes bloqués comprenant :

une source laser à modes bloqués configurée pour délivrer des impulsions laser présentant une fréquence de répétition ;

un modulateur électrooptique synchrone, SEOM, (1110), comprenant :

une lame quart d'onde (1210) ;

un premier séparateur ou polariseur de faisceau de polarisation (1220) ;

un modulateur électrooptique, EOM, (1230) ;

une circuiterie (1240) configurée pour commander le SEOM avec une forme d'onde de commande, la forme d'onde de commande étant une forme d'onde sinusoïdale à cohérence de phase à une fréquence égale à la moitié de la fréquence de répétition de la source laser à modes bloqués ; et

un deuxième séparateur de faisceau de polarisation (1250) ;

dans lequel le SEOM est agencé pour diriger les impulsions laser provenant de la source laser à travers la lame quart d'onde, le premier séparateur de faisceau de polarisation, l'EOM puis le deuxième séparateur de faisceau de polarisation ;

dans lequel le deuxième séparateur de faisceau de polarisation est configuré pour séparer les impulsions de lumière provenant de l'EOM en un premier train d'impulsions dans une première direction présentant un premier état de polarisation et un deuxième train d'impulsions dans une deuxième direction présentant un deuxième état de polarisation ;

dans lequel le laser ultrarapide à modes bloqués comprend en outre un ou plusieurs éléments optiques configurés pour retourner le deuxième train d'impulsions au SEOM.

2. Laser ultrarapide à modes bloqués selon la revendication 1, dans lequel le SEOM est configuré pour générer une sortie à modulation de phase.

3. Laser ultrarapide à modes bloqués selon la revendication 1, dans lequel le SEOM est configuré pour générer une sortie à modulation d'amplitude.

4. Laser ultrarapide à modes bloqués selon la revendication 1, dans lequel le SEOM comprend une cellule de Pockels.

5. Laser ultrarapide à modes bloqués selon la revendication 1, comprenant en outre un trajet de rebouclage configuré pour diriger le deuxième train d'impulsions de retour dans une entrée du SEOM ;

dans lequel un retard du trajet de rebouclage est configuré pour amener une impulsion dans le deuxième train d'impulsions à coïncider avec l'arrivée de l'impulsion suivante dans le train d'impulsions généré par la source laser à modes bloqués.

6. Laser ultrarapide à modes bloqués, comprenant :

une source laser à modes bloqués configurée pour délivrer des impulsions laser présentant une fréquence de répétition ;

$2^n - 1$ modulateurs électrooptiques synchrones, SEOM, selon la revendication 1 agencés dans n étages, n étant un entier supérieur à 1 ;

pour k = 1 à n, le $k^{\text{ième}}$ étage comprend $2^{(k-1)}$ SEOM, des sorties des SEOM dans le $k^{\text{ième}}$ étage étant fournies au SEOM du $(k+1)^{\text{ième}}$ étage, chacun des SEOM dans le $k^{\text{ième}}$ étage étant commandé avec une forme d'onde sinusoïdale à cohérence de phase à une fréquence égale à 1/2 de la fréquence de répétition du train d'impulsions entrant dans l'étage.

**FIG. 1**
**(PRIOR ART)**

**FIG. 2**
**(PRIOR ART)**

## FIG. 3
### (PRIOR ART)

## FIG. 4
### (PRIOR ART)

*FIG. 5*

*FIG. 6*

*FIG. 7*

*FIG. 8*

*FIG. 9*

*FIG. 10*

**FIG. 11**

**FIG. 12**

**FIG. 13**

*FIG. 14*

*FIG. 15*

*FIG. 16*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006039419 A1, DESHI TAN
- US 2004253000 A1, GRIFIN ROBERT ANTHONY
- US 2010128744 A1, DELADURANTAYE PASCAL
- US 2018342847 A1, BROOKER JEFFREY S
- US 2009245301 A1, PENG XIAOYUAN
- US 2014050235 A1, CLOWES JOHN REDVERS